# EUROPÄISCHE PATENTSCHRIFT

(11) **EP 3 130 531 B1**
(45) Veröffentlichungstag und Bekanntmachung des Hinweises auf die Patenterteilung: **05.09.2018**
(21) Anmeldenummer: 16001648.1
(22) Anmeldetag: 27.07.2016
(51) Int. Cl.: B63H 20/00, F02B 61/04, F02B 75/06

(54) **AUSSENBORDMOTOR DER BRENNKRAFTMASCHINEN HUBKOLBENBAUART**
OUTBOARD MOTOR OF THE COMBUSTION ENGINE STROKE PISTON TYPE
MOTEUR HORS-BORD DE TYPE A PISTON ALTERNATIF DE MOTEUR A COMBUSTION INTERNE

(30) Priorität: 13.08.2015 DE 102015010549
(43) Veröffentlichungstag der Anmeldung: 15.02.2017
(73) Patentinhaber: Neander Motors AG, 24143 Kiel (DE)
(72) Erfinder: Brüstle, Claus, D-74228 Nordheim (DE)

(56) Entgegenhaltungen:
- DE-B3-102012 015 907
- US-A- 5 078 101
- US-A- 5 370 563

## Beschreibung

Die Erfindung bezieht sich auf einen Außenbordmotor der Brennkraftmaschinen Hubkolbenbauart, umfassend ein Kurbelwellensystem mit wenigstens einer in einem Maschinengehäuse der Brennkraftmaschine aufrecht stehenden Kurbelwelle gemäß dem Oberbegriff des Patentanspruchs 1.

Es ist eine Außenbordmotoreinheit bekannt, US 5,163,394, die über eine Hubkolbenbrennkraftmaschine verfügt. Diese Brennkraftmaschine weist horizontale Zylinder mit darin arbeitenden Hubolben auf, die mit einer aufrecht stehenden Kurbelwelle unter Zwischenschaltung von Pleueln zusammenwirken. Diese Kurbelwelle ist an einem oberen Endbereich mit einem Schwungrad versehen, und sie treibt über einen Endlosriementrieb eine Nockenwelle an. Das Schwungrad und bereichsweise der Endlosriementrieb sind mittels einer Verkleidung abgedeckt, die unterhalb einer den Außenbordmotor umgebenden Haube verläuft.

Die US 3,750,615 gibt einen Außenbordmotor wieder, der ein aufrecht stehendes Antriebswellengehäuse aufweist. Benachbart einer Oberseite des Antriebswellengehäuses ist eine Antriebseinheit in Gestalt einer Brennkraftmaschine angeordnet, aus der eine mit einem Schwungrad versehen Welle herausgeführt ist. Schwungrad und Brennkraftmaschine sind mittels einer Verkleidung abgedeckt, die einen Topf mit einem Deckel umfasst. Am Topf ist ein Anschlussstutzen vorgesehen, der unter Zwischenschaltung eines Dichtkörpers das Antriebswellengehäuse umringt. Der Topf ist unter Vermittlung einer Schraube an einem Stehbolzen einer Befestigungseinrichtung des Außenbordmotors befestigt. Oberhalb des Schwungrads erstreckt sich ein horizontaler Arm.

Aus der US 6,132,273 geht ein Außenbordmotor mit liegenden Zylindern und einer vertikal dazu verlaufenden Kurbelwelle hervor. Letztere besitzt an ihrem oberen Ende ein Schwungrad, das mit einer Schwungradabdeckung verkleidet ist. Der Außenbordmotor wird im Wesentlichen von einer Haubenstruktur umgeben, die über eine Oberteil und ein Unterteil verfügt. Das Oberteil ist über Verschlüsse mit dem Unterteil verbunden.

Gemäß der US 5,370563 besitzt eine senkrechte Kurbelwelle eines Außenbordmotors ein Schwungrad. Eine Abdeckung für das Schwungrad erstreckt sich unterhalb einer Wand der den Außenbordmotor umhüllenden Motorhaube.

Aus der DE 10 2012 015 907 B3 ist ein Außenbordmotor mit zwei aufrecht stehenden Kurbelwellen bekannt, welche an ihren oberen Endbereichen Schwungräder aufweisen.

Es ist Aufgabe der Erfindung, eine funktionsgerechte Verkleidung für wenigsten ein Schwungrad einer an einem oberen Endbereich eines Kurbelwellensystems angeordneten Schwungradeinrichtung zu konzipieren, welche Verkleidung unter Vermittlung von mit vertretbaren Mitteln realsierbaren Halteinrichtungen an einem Außenbordmotor der Brennkraftmaschinen Hubkolbenbauart festsetzbar ist.

Nach der Erfindung wird diese Aufgabe durch die Merkmale des Patentanspruchs 1 gelöst. Weitere, die Erfindung ausgestaltende Merkmale sind in den Unteransprüchen enthalten.

Die mit der Erfindung hauptsächlich erzielten Vorteile sind darin zu sehen, dass die mit den aufrecht im Maschinengehäuse stehenden Kurbelwellen des Kurbelwellensystems verbundenen Schwungräder, die in einem oberen Bereich der Brennkraftmaschine angebracht sind, wobei mittels der mit serviceüblichem Aufwand montierbaren Verkleidung der Schwungräder, auch und gerade bei geöffneter Haube des Außenbordmotors und rotierenden Schwungrädern, effizienter Schutz für nahe an besagtem Außenbordmotor stehende Personen gewährleistet ist. Dabei werden die Schwenkachsen der Kurbelwellen, die mit den Schwungrädern fest verbunden sind und letztere in axialer Richtung durchdringen, zur Befestigung der besagten Schwungräder auf vorbildliche Weise herangezogen. Einfallsreich ist, dass zwischen der die Schwungräder umgebenden Hüllwand der Abdeckung und den Schwenkachsen der Schwungräder erste und zweite Halteinrichtungen für die Abdeckung wirksam sind, die Verbindungsbuchsen umfassen, wobei die Verbindungsbuchsen einerseits an der Hüllwand und andererseits an den Außenringen der Wälzlager befestigt, wovon die Innenringe drehfest mit den Schwenkachsen der Schwungräder verbunden sind. Zur Unterstützung von letzterem umfasst jede Verbindungsbuchse an einem oberen Ende eine erste Aufnahmeeinrichtung für die Hüllwand und an einem unteren Ende eine zweite Aufnahmeeinrichtung für den Außenring des Wälzlagers aufweisen. Hervorzuheben ist, dass jede Schwenkachse der Schwungräder eine Achsverlängerung zur Aufnahme des Innenrings des Wälzlagers aufweist. Beispielgebend ist, dass die Achsverlängerung eine das Schwungrad axial sichernde Schraubenmutter besitzt, auf der sich der Innenring des Wälzlagers unter Zwischenschaltung von wenigstens einem Distanzelement abstützt.

Maßstäbe setzt die Lösung, bei der zur Axialsicherung des Innenrings des Wälzlagers die Befestigungsschraube dient, die in ein von der freien Seite der Achsverlängerung aus eingebrachtes axiales Gewinde hineingedreht ist, wobei zwischen dem Schraubenkopf der Befestigungsschraube und dem Innenring des Wälzlagers ein Distanzring vorgesehen ist. Außerdem ist vorbildlich, dass zur Axialsicherung der Verbindungsbuchse an der Hüllwand eine Haltevorrichtung z.B. in Form eines Halterings dient, welche Haltevorrichtung zwischen Verbindungsbuchse und Hüllwand wirksam ist.

Schließlich trägt zur Optimierung der Verbindungsbuchse bei, wenn zwischen der oberen Seite dieser Verbindungsbuchse und der Hüllwand ein pilsförmiges Abdeckungselement vorgesehen ist, wobei letzteres einerseits mittels einer Festsetzvorrichtung mit einer Innenwand der Verbindungsbuchse in Wirkverbindung steht und andererseits sich mit der Ringlippe auf der Hüllwand abstützt.

In der Zeichnung wird ein Ausführungsbeispiel der Erfindung gezeigt, das nachstehend näher beschrieben wird.

Es zeigen
Fig. 1 eine Ansicht von oben auf einen Außenbordmotor der Brennkraftmaschinen Hubkolbenbauart,

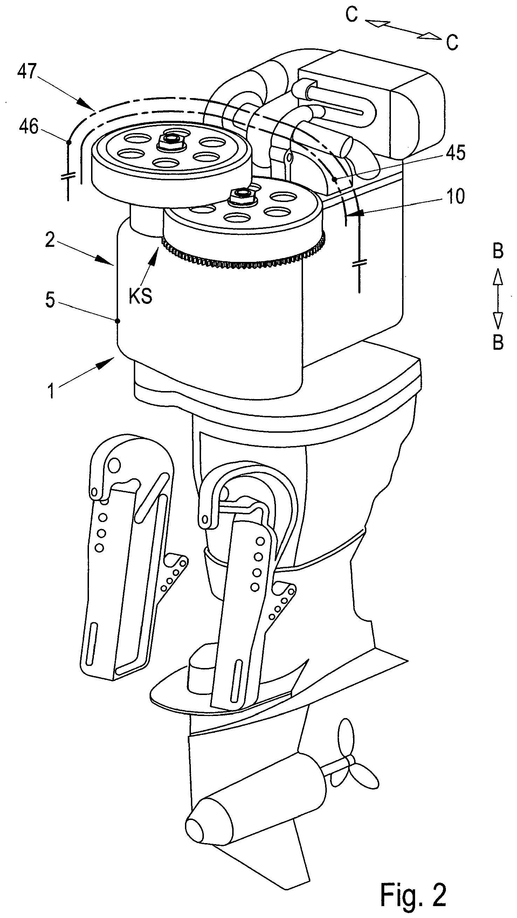

Fig. 2 eine Schrägansicht von links hinten oben auf den Außenbordmotor nach Fig. 1,
Fig. 3 eine schematische Darstellung von Schwungrädern des Außenbordmotors der Brennkraftmaschinen Bauart mit einer Abdeckung und einer diese Abdeckung und den Außenbordmotor umgebenden Haube.
Fig. 4 eine Einzelheit X der Fig. 3 in größerem Maßstab.

Ein Außenbordmotor 1 der Brennkraftmaschinen Hubkolbenbauart dient zum Antrieb eines nicht abgebildeten Schiffs. Eine Brennkraftmaschine 2 weist eine Kurbelwellensystem Ks mit zwei Kurbelwellen 3 und 4 auf, die in einem Maschinengehäuse 5 aufrecht stehenden Kurbelwellen 3 und 4 sind außerhalb des Maschinengehäuses 5, und zwar in oberen Endbereichen 6 und 6' mit Schwungrädern 7 und 8 versehen. Die Schwungräder 7 und 8 sind in axialer Richtung A-A der Kurbelwellen 3 und 4 betrachtet versetzt zueinander angeordnet, wobei sich nach Art von Kreissegmenten überlappen. Die Kurbelwellen 3 und 4 werden von in Zylindern des Maschinengehäuses hin und her bewegten Kolben über Pleuel betätigt -nicht dargestellt- und treiben unter Zwischenschaltung eines Getriebes einen unterhalb einer Wasserlinie arbeitenden Propeller an -DE 10 2012 015 907 B3-.

Ausgehend von einer Oberseite 9 der Brennkraftmaschine 2 umhüllt eine z.B. schwenkbare und/oder abnehmbare Abdeckung 10 beide Schwungräder 7 und 8 über einen wesentlichen Bereich in horizontaler bzw. vertikaler Richtung B-B und C-C. Dabei wird die Abdeckung 10 an Schwenkachsen 11 und 12 der Schwungräder 7 und 8 lösbar in Lage gehalten. Um dies zu realisieren, sind zwischen einer die Schwungräder 7 und 8 umgebenden Hüllwand 13 der Abdeckung 10 und den Schwenkachsen 11 und 12 der Schwungräder 7 und 8 erste und zweite Halteeinrichtungen 14 und 15 vorgesehen, die Verbindungsbuchsen 16 und 17 umfassen. Letztere können aus Kunststoff, Leichtmetall oder dgl. bestehen und sind einerseits an der Hüllwand 13 und andererseits an Außenringen 18 und 19 von Wälzlagern 20 und 21 befestigt, wovon Innenringe 22 und 23 der besagten Wälzlager 20 und 21 drehfest mit den Schwenkachsen 11 und 12 der Schwungräder 7 und 8 verbunden sind. Jede Verbindungsbuchs z.B. 16 weist an einem oberen Ende 24 eine erste Aufnahmeeinrichtung 25 für die Hüllwand 13 und an einem unteren Ende 26 eine zweite Aufnahmeeinrichtung 27 für den Außenring 18 des Wälzlagers 20 auf. Die Schwenkachsen 11 und 12 der Schwungräder 7 und 8 sind mit Achsverlängerungen 28 und 29 versehen, die zur Aufnahme der Innenringe 22 und 23 ausgebildet sind. Jede Achsverlängerung bspw. 28 besitzt eine das Schwungrad 7 axial sichernde Schraubenmutter 30, auf der sich der Innenring 22 des Wälzlagers 20 unter Zwischenschaltung von wenigstens einem Distanzelement 31 abstützt.

Zur Axialsicherung des Innenrings 22 des Wälzlagers 20 wird eine Befestigungsschraube 32 eingesetzt, die in ein von einer freien Seite 33 der Achsverlängerung 27 aus eingebrachtes axiales Gewinde 33 hineingedreht ist. Vervollständigt wird diese Lösung, indem zwischen einem Schraubenkopf 35 der Befestigungsschraube 32 und dem Innenring 22 des Wälzlagers 20 ein Distanzring 35 angeordnet ist. Die Verbindungsbuchse 16 wird in axialer Richtung an der Hüllwand 13 wird mittels einer Haltevorrichtung 37 z.B. in Form eines Sicherungsrings 38 festgemacht, wobei die Haltevorrichtung 37 zwischen Verbindungsbuchse 16 und Hüllwand 13 wirksam ist.

Ausserdem ist zwischen einer oberen Buchsenseite 39 der Verbindungsbuchse 16 und der Hüllwand 13 ein Abdeckungselement 40 aus Kunststoff, Metall oder einem anderen geeigneten Werkstoff angebracht. Das Abdeckungselement 40 steht einerseits bspw. kraftschlüssig mittels einer Festsetzvorrichtung 41 mit einer Innenwand 42 in Wirkverbindung, und es stützt sich andererseits mit einer Ringlippe 43 an einer Außenseite 44 der Hüllwand 13 ab.

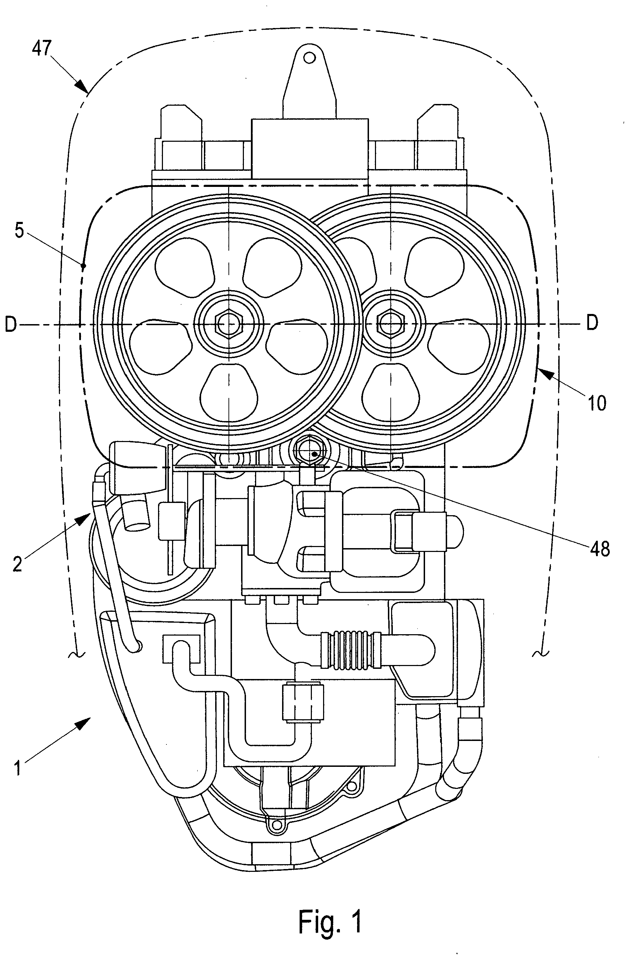

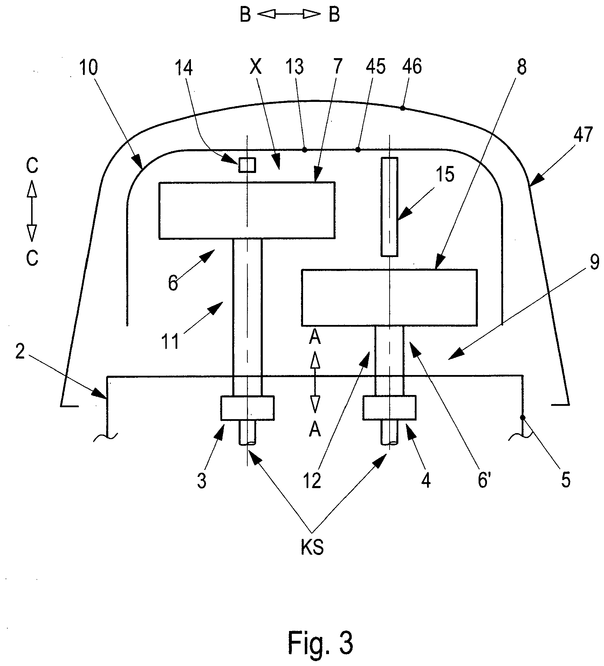

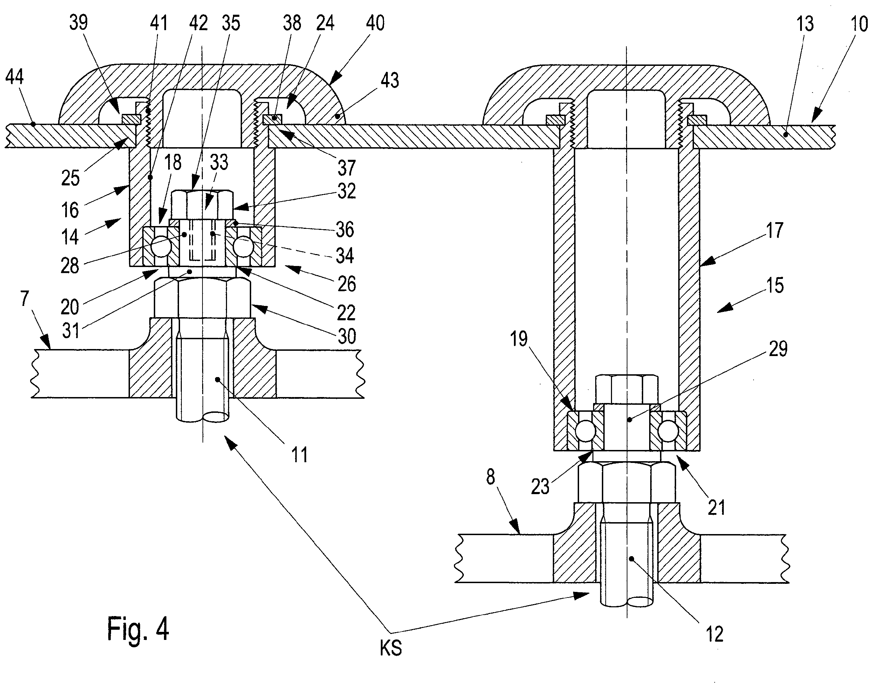

In den Fig. 3 und 4 sind Formlinien 45 und 46 dargestellt, die ungefähr einen Schnitt nach der Linie D-D der Fig. 1 wiedergeben. Die Formlinie 45 gehört zu der Abdeckung 10; die Formlinie 46 zu einer Haube 47, die den Außenbordmotor 1, einschließlich der Abdeckung 10 überwölbt. Darüber hinaus sind die Abdeckung 10 und die Haube 47 bspw. aus Kunststoff, Metall oder dgl. hergestellt.

Schließlich geht aus der Fig. 1 hervor, dass die Abdeckung 10 bspw. unter Vermittlung einer Schraube 48 an dem Maschinengehäuse 5 der Brennkraftmaschine 1 in Lage gehalten wird.

## Patentansprüche

1. Außenbordmotor (1) der Brennkraftmaschinen (2) Hubkolbenbauart, umfassend ein Kurbelwellensystem (Ks) mit einer in einem Maschinengehäuse (5) der Brennkraftmaschine (2) aufrecht stehenden Kurbelwelle (3; 4), die an einem oberen Endbereich (6, 6') ein Schwungrad (7, 8) aufweist, welches Schwungrad (7, 8) mit einer Abdeckung (10) verkleidet ist, die besagtes Schwungrad (7, 8) von einer Oberseite (9) der Brennkraftmaschine (2) ausgehend umgibt, wobei das Kurbelwellensystem (Ks) über zwei parallele Kurbelwellen (3 und 4) verfügt, die an ihren oberen Endbereichen (6 und 6') jeweils mit Schwungrädern (7 und 8) versehen sind, wobei die Schwungräder (7 und 8) in axialer Richtung (A-A) der Kurbelwellen (3 und 4) betrachtet versetzt zueinander angeordnet sind und sich nach Art von Kreissegmenten überlappen und dass die Abdeckung (10) beide Schwungräder (7 und 8) über einen wesentlichen Bereich umhüllt, **dadurch gekennzeichnet, dass** die Abdeckung (10) an Schwenkachsen (11 und 12) der Schwungräder (7und 8) in Lage gehalten wird und zwischen einer die Schwungräder (7 und 8) umgebenden Hüllwand (13) der Abdeckung (10) und den Schwenkachsen (11 und 12) der Schwungräder (7 und 8) erste und zweite Halteinrichtungen (14 und 15) für die Abdeckung (10) wirksam sind, die erste und zweite Verbindungsbuchsen (16 und 17) umfassen, wobei besagte Verbindungsbuchsen (16 und 17) einerseits an der Hüllwand (13) und andererseits an Außenringen (18 und 19) von Wälzlagern (20 und 21) befestigt sind, wovon Innenringe (22 und 23) der Wälzlager (20 und 21) drehfest mit den Schwenkachsen (11 und 12) der Schwungräder (7 und 8) verbunden sind.

2. Außenbordmotor nach Anspruch 1, **dadurch gekennzeichnet, dass** jede Verbindungsbuchse(z.B. 16) an einem oberen Ende (24) eine erste Aufnahmeeinrichtung (25) für die Hüllwand (13) und an einem unteren Ende (26) eine zweite Aufnahmeeinrichtung (27) für den Außenring (18) des Wälzlagers (20) umfasst.

3. Außenbordmotor nach einem oder mehreren der vorangehenden Ansprüche, **dadurch gekennzeichnet, dass** jede Schwenkachse (z.B. 11) der Schwungräder (7 und 8) eine Achsverlängerung (z.B. 28) zur Aufnahme des Innenrings (21) des Wälzlagers (20) umfasst.

4. Außenbordmotor nach einem oder mehreren der vorangehenden Ansprüche, **dadurch gekennzeichnet, dass** die Achsverlängerung (20) eine das Schwungrad (7) axial sichernde Schraubenmutter (30) besitzt, auf der sich der Innenring (21) des Wälzlagers (20) unter Zwischenschaltung von wenigstens einem Distanzelement (31) abstützt.

5. Außenbordmotor nach einem oder mehreren der vorangehenden Ansprüche, **dadurch gekennzeichnet, dass** zur Axialsicherung des Innenrings (21) des Wälzlagers (20) eine Befestigungsschraube (32) dient, die in ein von einer freien Seite (30) der Achsverlängerung (20) aus eingebrachtes axiales Gewinde (34) hineingedreht ist.

6. Außenbordmotor nach Anspruch 5, **dadurch gekennzeichnet, dass** zwischen einem Schraubenkopf (35) der Befestigungsschraube (32) und dem Innenring (21) des Wälzlagers (20) ein Distanzring (37) vorgesehen ist.

7. Außenbordmotor nach einem oder mehreren der vorangehenden Ansprüchen, **dadurch gekennzeichnet, dass** zur Axialsicherung der Verbindungsbuchse (16) an der Hüllwand (13) eine Haltevorrichtung (37) z.B. in Form eines Sicherungsrings dient, welche Haltevorrichtung (37) zwischen Verbindungsbuchse (16) und Hüllwand (13) wirksam ist.

8. Außenbordmotor nach einem oder mehreren der vorangehenden Ansprüche, **dadurch gekennzeichnet, dass** zwischen einer oberen Buchsenseite (39) der Verbindungsbuchse (16) und der Hüllwand (13) ein Abdeckungselement (40) vorgesehen ist.

9. Außenbordmotor nach Anspruch 8, **dadurch gekennzeichnet, dass** das Abdeckungselement (40) einerseits mittels eines Festsetzvorrichtung (41) mit einer Innenwand (42) der Verbindungsbuchse (16) z.B. kraftschlüssig in Wirkverbindung steht und andererseits sich mit einer Ringlippe (43) auf der Hüllwand (13) abstützt.

## Claims

1. An outboard motor (1) of the combustion engine (2) stroke piston type, including a crankshaft system, (Ks) with a crankshaft (3; 4) standing upright in a machine housing (5) of the combustion engine (2), which crankshaft comprises a flywheel (7, 8) on an upper end region (6, 6'), which flywheel (7, 8) is covered by a cover (10) that encloses said flywheel (7, 8) starting from an upper side (9) of the combustion engine (2), wherein the crankshaft system (Ks) comprises two parallel crankshafts (3 and 4), which, on their upper end regions (6, 6'), are each provided with flywheels (7 and 8), wherein the flywheels (7 and 8) are arranged offset to one another when viewed in the axial direction (A-A) of the crankshafts (3 and 4) and overlap each other in a circular-segment-type manner, and that the cover (10) encloses both flywheels (7 and 8) over a substantial region, **characterized in that** the cover (10) is held in position on pivot axles (11 and 12) of the flywheels (7 and 8) and **in that** first and second holding means (14 and 15) are effective for the cover (10) between a shell wall (13) of the cover (10) enclosing the flywheels (7 and 8) and the pivot axles (11 and 12) of the flywheels (7 and 8), said holding means including first and second connection bushings (16 and 17), wherein said connection bushings (16 and 17) are fastened, on one side, to the shell wall (13) and, on the other side, to outer rings (18 and 19) of roller bearings (20 and 21), with inner rings (22 and 23) of the roller bearings (20 and 21) being co-rotationally connected to the pivot axles (11 and 12) of the flywheels (7 and 8).

2. Outboard motor according to claim 1, **characterized in that** each connection bushing (e.g. 16) includes, on an upper end (24), a first receiving means (25) for the shell wall (13) and, on a lower end (26), a second receiving means (27) for the outer ring (18) of the roller bearing (20).

3. Outboard motor according to at least one of the preceding claims, **characterized in that** each pivot axle (e.g. 11) of the flywheels (7 and 8) includes an axle extension (e.g. 28) for receiving the inner ring (21) of the roller bearing (20).

4. Outboard motor according to at least one of the preceding claims, **characterized in that** the axle extension (20) has a screw nut (30) axially securing the flywheel (7), said screw nut supporting the inner ring (21) of the roller bearing (20) with at least one spacer (31) interposed between them.

5. Outboard motor according to at least one of the preceding claims, **characterized in that** a fastening screw (32) serves to axially secure the inner ring (21) of the roller bearing (20), said screw being turned into an axial thread (34) formed from a free side (30) of the axle extension (20).

6. Outboard motor according to claim 5, **characterized in that** a spacer ring (37) is provided between a screw head (35) of the fastening screw (32) and the inner ring (21) of the roller bearing (20).

7. Outboard motor according to at least one of the preceding claims, **characterized in that** a holding device (37), e.g. in the form of a securing ring, serves to axially secure the connection bushing (16) to the shell wall (13), which holding device (37) is effective between the connection bushing (16) and the shell wall (13).

8. Outboard motor according to at least one of the preceding claims, **characterized in that** a cover element (40) is provided between an upper bushing side (39) of the connection bushing (16) and the shell wall (13).

9. Outboard motor according to claim 8, **characterized in that** the cover element (40), on the one side, is operatively connected, e.g. in a force-fitting manner, with an inner wall (42) of the connection bushing (16) by means of a locking device (41) and, on the other side, is supported on the shell wall (13) with a ring lip (43).

## Revendications

1. Moteur hors-bord (1) de type moteur alternatif à combustion interne (2), comprenant un système de vilebrequins (Ks) doté d'un vilebrequin (3, 4) placé debout dans un carter de machine (5) du moteur à combustion interne (2), lequel vilebrequin présente un volant d'inertie (7, 8) sur une partie terminale supérieure (6, 6'), lequel volant d'inertie (7, 8) est revêtu d'un recouvrement (10) qui entoure ledit volant d'inertie (7, 8) en partant d'un côté supérieur (9) du moteur à combustion interne (2), le système de vilebrequins (Ks) disposant de deux vilebrequins parallèles (3 et 4) qui sont respectivement munis de volants d'inertie (7 et 8) sur leurs parties terminales supérieures (6 et 6'), les volants d'inertie (7 et 8), en vue en direction axiale (A - A) des vilebrequins (3 et 4), étant disposés de manière décalée l'un par rapport à l'autre et se chevauchant à la manière de segments de cercle, et le recouvrement (10) enveloppant les deux volants d'inertie (7 et 8) sur une partie essentielle, **caractérisé en ce que** le recouvrement (10) est maintenu en position sur des axes de pivotement (11 et 12) des volants d'inertie (7 et 8) et **en ce qu'**entre une paroi enveloppante (13) du recouvrement (10), entourant l'un des volants d'inertie (7 et 8), et les axes de pivotement (11 et 12) des volants d'inertie (7 et 8), des premiers et deuxièmes dispositifs de maintien (14 et 15) sont actifs, lesquels comprennent des premières et deuxièmes douilles de raccordement (16 et 17), les dites douilles de raccordement (16 et 17) étant fixées, d'une part, sur la paroi enveloppante (13) et, d'autre part, sur des bagues extérieures (18 et 19) de paliers de roulement (20 et 21), dont des bagues intérieures (22 et 23) des paliers de roulement (20 et 21) sont reliées de manière immobilisée en rotation aux axes de pivotement (11 et 12) des volants d'inertie (7 et 8).

2. Moteur hors-bord selon la revendication 1, **caractérisé en ce que** chaque douille de raccordement (par ex. 16) comprend, sur une extrémité supérieure (24), un premier dispositif de logement (25) pour la paroi enveloppante (13) et, sur une extrémité inférieure (26), un deuxième dispositif de logement (27) pour la bague extérieure (18) du palier de roulement (20).

3. Moteur hors-bord selon l'une quelconque ou plusieurs des revendications précédentes, **caractérisé en ce que** chaque axe de pivotement (par ex. 11) des volants d'inertie (7 et 8) comprend un prolongement d'axe (par ex. 28) pour le logement de la bague intérieure (21) du palier de roulement (20).

4. Moteur hors-bord selon l'une quelconque ou plusieurs des revendications précédentes, **caractérisé en ce que** le prolongement d'axe (20) possède un écrou bloquant axialement le volant d'inertie (7), sur lequel écrou s'appuie la bague intérieure (21) du palier de roulement (20) avec au moins un élément d'écartement (31) intercalé.

5. Moteur hors-bord selon l'une quelconque ou plusieurs des revendications précédentes, **caractérisé en ce qu'**une vis de fixation (32) sert au blocage axial de la bague intérieure (21) du palier de roulement (20), laquelle vis de fixation est vissée dans un filetage (34) axial appliqué depuis un côté libre (30) du prolongement d'axe (20).

6. Moteur hors-bord selon la revendication 5, **caractérisé en ce qu'**une bague d'écartement (37) est ménagée entre une tête de vis (35) de la vis de fixation (32) et la bague intérieure (21) du palier de roulement (20).

7. Moteur hors-bord selon l'une quelconque ou plusieurs des revendications précédentes, **caractérisé en ce qu'**un dispositif de maintien (37), par ex. sous forme d'une bague de sûreté, sert au blocage axial de la douille de raccordement (16) sur la paroi enveloppante (13), lequel dispositif de maintien (37) est actif entre la douille de raccordement (18) et la paroi enveloppante (13).

8. Moteur hors-bord selon l'une quelconque ou plusieurs des revendications précédentes, **caractérisé en ce qu'**un élément de recouvrement (40) est prévu entre un côté supérieur de douille (39) de la douille de raccordement (16) et la paroi enveloppante (13).

9. Moteur hors-bord selon la revendication 8, **caractérisé en ce que** l'élément de recouvrement (40), d'une part, est en liaison active avec une paroi intérieure (42) de la douille de raccordement (16), par ex. par adhérence de force, au moyen d'un dispositif de fixation (41), et d'autre part **en ce qu'**il s'appuie sur la paroi enveloppante (13) avec une lèvre circulaire (43).
